# EUROPEAN PATENT SPECIFICATION

(11) **EP 1 486 010 B1**
(45) Date of publication and mention of the grant of the patent: **07.06.2006**
(21) Application number: 03704910.3
(22) Date of filing: 03.03.2003
(51) Int. Cl.: H04B 3/58

(54) **REPEATER FOR POWER LINE COMMUNICATION SYSTEM**
REPEATER FÜR VERSORGUNGSLEITUNGSSYSTEM
RÉPÉTEUR POUR SYSTÈME DE COMMUNICATION PAR LIGNE ÉLECTRIQUE

(30) Priority: 12.03.2002 DE 10210858
(43) Date of publication of application: 15.12.2004
(73) Proprietor: Philips Intellectual Property & Standards GmbH, 20099 Hamburg (DE); Koninklijke Philips Electronics N.V., 5621 BA Eindhoven (NL)
(72) Inventor: VOLLMER, Thomas, Weisshausstr. 2 52066 Aachen (DE); DÜRBAUM, Thomas, Weisshausstr. 2 52066 Aachen (DE); DEPPE, Carsten, Weisshausstr. 2 52066 Aachen (DE)
(74) Representative: Meyer, Michael Josef
(86) International application number: PCT/IB2003/000873
(87) International publication number: WO 2003/077443

(56) References cited:
- WO-A-00/21212
- US-A- 4 642 607

## Description

The invention relates to a method and a device for data transmission in a power supply network.

The designation "Power Line Communication" (PLC) relates to a known method by which data is transmitted via the electrical lines of a power supply network which is intended *per se* for the supply of electricity. The advantage of a power line communication of this kind lies in the fact that, in more or less every household, lines belonging to the power supply network are present in virtually every room, making it possible to cross-link appliances in different rooms without the need for rewiring. Whilst, in this respect, by virtue of outdated statutory provisions, only small frequency ranges have hitherto been permitted on power supply lines for the transmission of signals, these restrictions will be lifted in the future, making data rates of more than 10 Mbit/s possible. Power line communication can be used here both as a main infeed in the sense of a "last mile" for infeeding the Internet via the power supply network, and also in setting up an in-home network. Using the high data rates referred to, it would, for example, be possible to send the signal from a video recorder from the living room directly to a television in a different room without additional cables.

However, the use of power supply lines for data communication encounters a number of technical difficulties, such as:
- high attenuation as a result of detours of the line installation (also where sockets are located close together in some cases).
- inadequate transmission between different phasing lines of the power supply network. According to the prior art, passive phase couplers are used in the distribution box for transmission between different phasing lines, as a result of which, however, the transmission power is distributed among the various phasing lines and is thereby reduced.
- the existence of numerous interference sources, including, in principle, every electronic appliance.
- the low permitted transmission power.

In order to solve some of the problems outlined above, it is known from WO 00/21212 for repeaters to be arranged, spaced apart from one another, along a phasing line of a power supply network, which repeaters can receive the data signal transmitted on the phasing line by means of a receiver, decode it and subsequently transmit it, amplified, back to the phasing line by means of a transmitter. US 4 642 607 discloses a power line carrier communication system comprising a transformer repeater which permits coupling of messages transmitted in one phase line to a receiving module coupled in a different phase line.

Against this background, it was an object of the present invention to provide a method and a device which enable an improvement of power line communication in power supply networks with multiple phasing lines.

This object is achieved by means of a method with the features as claimed in claim 1 and by a device with the features as claimed in claim 5. Advantageous embodiments are described in the dependent claims.

In a method for data transmission in a power supply network in accordance with the invention (so-called power line communication), the data transmitted on a phasing line of the power supply network is received and then re-transmitted. The method is characterized by the fact that the data is re-transmitted on at least one phasing line different from the phasing line from which it was received. The re-transmission of the data preferably takes place at the maximum permitted power.

A method of this kind safeguards the transmission of data between different phasing lines of a power supply network by actively passing on data transmitted on a phasing line to at least one different phasing line. Since, in particular, an amplification of the signals can also take place hereby, a reduction of the maximum attenuation to one half and a tripling of the effective transmission power per phasing line can be achieved with this method. In this manner, the reliability of the power line communication is ensured.

Using this method, the data received from a first phasing line can be re-transmitted on at least one different phasing line and, additionally, on the first phasing line. In this manner, a repeater function is realized on the first phasing line, which repeater function leads to the amplification of a weak signaL In particular, the data received from a first phasing line can subsequently be re-transmitted on all phasing lines of the power supply network using this method, preferably at the maximum permitted transmission power ("standard repeater"). A repetition of this kind of the data, with the same strength on all phasing lines, requires a minimal amount of control.

In accordance with a development of the method, the data may also be re-transmitted only on the phasing lines of the power supply network on which its original signal strength was weak, i. e. lay below a threshold value. In this manner, an "adaptive repeater" can be obtained, which repeats the signal only on the phasing lines on which no reception was yet likely.

In accordance with another development of the method, the data may also be re-transmitted on only the phasing lines of the power supply network to which the addressees of the particular data are connected. In the case of an "intelligent repeater" of this kind, which phasing lines are connected to which appliances must be known, for instance by means of analysis of associated response signals. If one of these appliances is then subsequently addressed by data on a phasing line of the power supply network, this data can specifically be passed on to that phasing line at which the addressee (appliance) is located.

Further, it is advantageous if, with this method, line management is also undertaken, in which data is prepared before being re-transmitted. The preparation may, in particular, comprise channel equalization and channel matching. To this end, recourse is preferably had to a previously undertaken channel analysis.

The invention further relates to a device for data transmission in a power supply network (power line communication), which device comprises a receiver for receiving data transmitted on a first phasing line of the power supply network, and a transmitter for transmitting data on a second phasing line of the power supply network. The device is characterized in that the first and second phasing lines are different. This means that the data transmitted on the first phasing line and received by the receiver can be passed on, with the device, via the transmitter to a different (second) phasing line, so that the device, in the context of the method explained above, brings about a coupling of the different phasing lines.

The device hereby preferably comprises a receiver and a transmitter for each phasing line of the power supply network, wherein all receivers and transmitters are coupled together by a control unit of the device. In this manner it is possible to receive data from any one of the phasing lines and to pass it on to at least any one other phasing line.

The device and/or its control unit may also be set up in such a way that the device can execute a method of the type explained above. This means that it can execute, in particular, the functions of the explained standard repeater, of an adaptive repeater, intelligent repeater and/or line management.

Furthermore, the device may preferably comprise a (bulk) storage device for the temporary storage of data transmitted on the phasing lines of the power supply network. With the aid of this storage device, it is then possible, with appropriate programming of the control unit of the device, for the device to operate centrally to undertake standby functions for all appliances connected to the power supply network, so that these can be completely switched off.

Furthermore, the device may be equipped with additional transmitting and receiving modules, which enable connection and communication with other transmission methods and networks. In this manner, the device can operate as a universal or adaptable coupling module between different transmission networks.

Furthermore, the device may be equipped with an additional network filter in order to improve the separation of an "in-home network" from an "access network", which, for example, ensures access to the Internet, and thereby to increase the possible data rate in the home. Hereby, a further transmitter and receiver may preferably be integrated on the access side, and selected data may be routed past the filter.

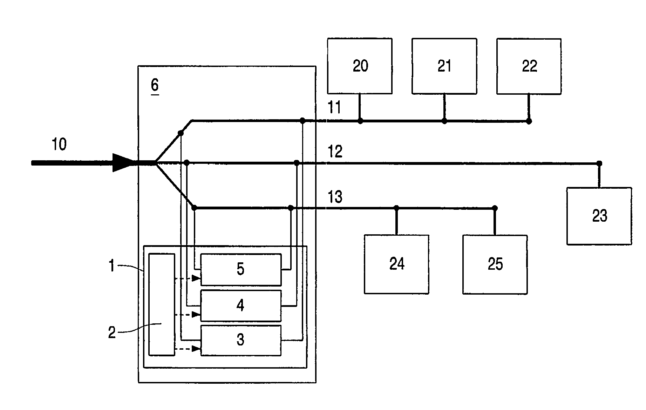

The invention will be further described with reference to an example of an embodiment shown in the drawing, to which, however, the invention is not restricted.

The Figure shows schematically the structure of a power line communication with a device in accordance with the invention for coupling different phasing lines.

The upper part of the Figure shows an in-home network based on a power line communication, in which various appliances 20 - 25 are connected to the three phasing lines 11, 12 and 13 of a power supply line 10. These appliances may be, for example, a television 20, a video recorder 21 and a hard disk (HD) video recorder 22 on a first phasing line 11, a PC 23 on a second phasing line 12, and a washing machine 24 and a further appliance 25 on a third phasing line 13. In a configuration of this kind, problems of communication between two appliances (such as the video recorder 21 and the PC 23), which are connected to different phasing lines 11, 12, may occur.

In order to solve this problem, a repeater 1 is connected in accordance with the invention to the phasing lines 11, 12 and 13, wherein the repeater 1 is preferably installed in a central location in the meter box 6 or in a subsidiary distribution box. The only important consideration, however, is that the repeater 1 can be installed in a location at which access exists to all phases of the power supply network that are used in the building or dwelling, such as the cooker connection that is present in virtually every dwelling.

For each of the phasing lines 11, 12, 13, repeater 1 comprises a power line transceiver 3, 4, 5, each of which has a receiver for receiving data from a phasing line, and a transmitter for transmitting data on (the same) phasing line. As shown, transceiver 3 is connected to phasing line 11, transceiver 4 is connected to phasing line 12, and transceiver 5 is connected to phasing line 13.

Furthermore, all three transceivers 3, 4, 5 are coupled to a control unit 2. The control unit 2 may be of various designs in order to realize functions of different complexities. In the simplest case, as a standard repeater, it can uniformly pass the signal, received from one line, e.g. phasing line 11, and prepared, to all phasing lines 11, 12, 13. Conversely, in the case of operation as an adaptive repeater, the prepared signal is passed only to the phasing lines on which the original signal was weak, i.e. where no reception was yet likely. In the case of operation as an intelligent repeater, control unit 2 additionally analyses, on the basis of the associated response signals, to which phasing lines which appliances are connected. The re-transmitted information is then only ever transmitted on the lines at which the particular addressee is located. Finally, in the case of line management, repeater 1 can also simultaneously assume the function of channel analysis and, where this is possible and necessary, of compensation and matching.

The central arrangement of repeater 1 simultaneously solves the problems of attenuation, of phase coupling and of signal-to-noise ratio. By retrofitting existing installations with repeater 1, ultimate reliability and high data rates can be ensured, even in problematic cases.

### LIST OF REFERENCE NUMBERS:

- 1: Repeater in accordance with the invention
- 2: Control unit
- 3, 4, 5: Power line transceivers
- 6: Meter box
- 10: Power supply line
- 11, 12, 13: Phasing lines
- 20: Television
- 21: Video recorder
- 22: HD video recorder
- 23: PC
- 24: Washing machine
- 25: Appliance

## Claims

1. A method for data transmission in a power supply network, wherein data transmitted on a particular phasing line (11) of the power supply network is received and then re-transmitted, and the data is re-transmitted on at least one phasing line (12, 13) different from the said phasing line (11) **characterized in that** the data is re- transmitted on the phasing lines (11-13) on which its original signal strength lays below a threshold value.

2. A method as claimed in claim 1, **characterized in that** the data is re-transmitted on all phasing lines (11-13).

3. A method as claimed in at least one of claims 1 or 2, **characterized in that** the data is re-transmitted only on the phasing lines (11-13) to which the addressees (20-25) of the data are connected.

4. A method as claimed in at least one of claims 1 to 3, **characterized in that** a preparation, in particular a channel equalization and channel matching, is undertaken before the re-transmission.

5. A device (1) for data transmission in a power supply network, comprising a receiver(3-5) for receiving data transmitted on a first phasing line (11-13) of the power supply network, and a transmitter (3-5) for transmitting data on a second phasing line (12- 13) of the power supply network, wherein first and second phasing lines are different **characterized in that** the device is adapted to re-transmitted the data on the phasing lines (11-13) on which its original signal strength lays below a threshold value.

6. A device as claimed in claim 5, **characterized in that** it comprises a receiver and a transmitter (3-5) for each phasing line (11-13) of the power supply network, and that all receivers and transmitters are coupled together by a control unit (2).

7. A device as claimed in claim 5 or 6, **characterized in that** it comprises a storage device for the temporary storage of data transmitted on the phasing lines (11-13) of the power supply network.

8. A device as claimed in at least one of claims 5 to 7, **characterized in that** it is equipped with additional transmitting, and receiving modules for connection to other networks with different transmission methods.

9. A device as claimed in at least one of claims 5 to 8, **characterized in that** it is equipped with an additional network filter for separation of an in-home network from an external network, wherein a further transmitter and receiver are preferably integrated on the external side, and selected data is routed past the filter.

## Patentansprüche

1. Verfahren zur Datenübertragung in einem Versorgungsnetzwerk, wobei über eine bestimmte Phasenleitung (11) des Versorgungsnetzwerkes übertragene Daten empfangen und danach neu übertragen werden, und die Daten über wenigstens eine Phasenleitung (12, 13), die anders ist als die Phasenleitung (11) neu übertragen werden, **dadurch gekennzeichnet, dass** die Daten über die Phasenleitungen (11 - 13) übertragen werden, in denen die ursprüngliche Signalstärke unterhalb eines Schwellenwertes liegt.

2. Verfahren nach Anspruch 1, **dadurch gekennzeichnet, dass** die Daten über alle Phasenleitungen (11 - 13) übertragen werden.

3. Verfahren nach wenigstens einem der Ansprüche 1 oder 2, **dadurch gekennzeichnet, dass** die Daten nur über die Phasenleitungen (11 - 13) übertragen werden, mit denen die Adressen (20 - 25) der Daten verbunden sind.

4. Verfahren nach wenigstens einem der Ansprüche 1 bis 3, **dadurch gekennzeichnet, dass** eine Vorbereitung, insbesondere ein Kanalausgleich und eine Kanalanpassung, vor der Neuübertragung durchgeführt wird.

5. Anordnung (1) zur Datenübertragung in einem Versorgungsnetzwerk, mit einem Empfänger (3 - 5) zum Empfangen über eine erste Phasenleitung (11-13) des Versorgungsnetzwerkes übertragener Daten, und einem Sender (3 - 5) zum Aussenden von Daten über eine zweite Phasenleitung (12 - 13) des Versorgungsnetzwerkes, wobei die erste und die zweite Phasenleitung anders sind, **dadurch gekennzeichnet, dass** die Anordnung dazu vorgesehen ist, die Daten über die Phasenleitungen (11 - 13), in denen die ursprüngliche Signalstärke unterhalb eines Schwellenwertes liegt, übertragen werden.

6. Anordnung nach Anspruch 5, **dadurch gekennzeichnet, dass** diese einen Empfänger und einen Sender (3 - 5) für jede Phasenleitung (11 - 13) des Versorgungsnetzwerkes aufweist, und dass alle Empfänger und Sender mit Hilfe einer Steuereinheit (2) miteinander gekoppelt sind.

7. Anordnung nach Anspruch 5 oder 6, **dadurch gekennzeichnet, dass** diese eine Speicheranordnung zur zeitweiligen Speicherung über die Phasenleitungen (11 - 13) des Versorgungsnetzwerkes übertragener Daten aufweist.

8. Anordnung nach wenigstens einem der Ansprüche 5 bis 7, **dadurch gekennzeichnet, dass** diese mit zusätzlichen Sende- und Empfangsmodulen zur Verbindung mit anderen Netzwerken mit anderen Übertragungsverfahren versehen ist.

9. Anordnung nach wenigstens einem der Ansprüche 5 bis 8, **dadurch gekennzeichnet, dass** diese mit einem zusätzlichen Netzwerkfilter zum Trennen einen Eigennetzwerkes von einem externen Netzwerk versehen ist, wobei ein weiterer Sender und Empfänger vorzugsweise an der externen Seite integriert sind und selektierte Daten an dem Filter entlang geleitet werden.

## Revendications

1. Procédé pour la transmission de données dans un réseau d'alimentation, dans lequel les données transmises sur une phase particulière (11) du réseau d'alimentation sont reçues et ensuite retransmises, et les données sont retransmises sur au moins une phase (12, 13) différente de ladite phase (11), **caractérisé en ce que** les données sont retransmises sur les phases (11-13) sur lesquelles leur intensité de signal d'origine se situe sous une valeur de seuil.

2. Procédé selon la revendication 1, **caractérisé en ce que** les données sont retransmises sur toutes les phases (11-13).

3. Procédé selon au moins une des revendications 1 ou 2, **caractérisé en ce que** les données sont retransmises uniquement sur les phases (11-13) auxquelles les destinataires (20-25) des données sont connectés.

4. Procédé selon au moins une des revendications 1 à 3, **caractérisé en ce qu'**une préparation, en particulier une égalisation de canal et une adaptation de canal, est entreprise avant la retransmission.

5. Dispositif (1) pour la transmission de données dans un réseau d'alimentation, comprenant un récepteur (3-5) destiné à recevoir des données transmises sur une première phase (11-13) du réseau d'alimentation, et un émetteur (3-5) destiné à transmettre des données sur une deuxième phase (12-13) du réseau d'alimentation, les première et deuxième phases étant différentes, **caractérisé en ce que** le dispositif est adapté pour retransmettre les données sur les phases (11-13) sur lesquelles leur intensité de signal d'origine se situe sous une valeur de seuil.

6. Dispositif selon la revendication 5, **caractérisé en ce qu'**il comprend un récepteur et un émetteur (3-5) pour chaque phase (11-13) du réseau d'alimentation, et **en ce que** tous les récepteurs et tous les émetteurs sont couplés ensemble par une unité de commande (2).

7. Dispositif selon la revendication 5 ou 6, **caractérisé en ce qu'**il comprend un dispositif de mémorisation pour la mémorisation temporaire de données transmises sur les phases (11-13) du réseau d'alimentation.

8. Dispositif selon au moins une des revendications 5 à 7, **caractérisé en ce qu'**il est équipé de modules d'émission et de réception supplémentaires pour la connexion à d'autres réseaux à l'aide de procédés de transmission différents.

9. Dispositif selon au moins une des revendications 5 à 8, **caractérisé en ce qu'**il est équipé d'un filtre de réseau supplémentaire pour la séparation d'un réseau domestique d'un réseau externe, un émetteur et un récepteur supplémentaires étant de préférence intégrés du côté externe, et des données sélectionnées étant routées au-delà du filtre.
